# EUROPEAN PATENT SPECIFICATION

(11) **EP 2 087 545 B1**
(45) Date of publication and mention of the grant of the patent: **29.10.2014**
(21) Application number: 07746667.0
(22) Date of filing: 23.05.2007
(51) Int. Cl.: H01M 8/04, H01M 8/06

(54) **FUEL CELL SYSTEM INCLUDING RELIABLE AIR SUPPLY LINE**
BRENNSTOFFZELLENSYSTEM MIT VERLÄSSLICHER FÜLLLEITUNG
SYSTÈME DE PILE À COMBUSTIBLE COMPRENANT UNE LIGNE D'ALIMENTATION EN AIR FIABLE

(30) Priority: 28.11.2006 KR 20060118309
(43) Date of publication of application: 12.08.2009
(73) Proprietor: Fuelcell Power Inc., Seongnam-city, Gyeonggi-do 463-816 (KR)
(72) Inventor: KIM, Ho-Suk, Seoul, 143-821 (KR); CHON, Yong-Jin, Seoul, 138-190 (KR); HONG, Byung-Sun, Seongnam-city, Gyeonggi-do, 463-816 (KR); SHINN, Mee-Nam, Yongin-city, Gyeonggi-do, 449-821 (KR)
(74) Representative: Domenego, Bertrand
(86) International application number: PCT/KR2007/002519
(87) International publication number: WO 2008/066227

(56) References cited:
- EP-A2- 1 273 552
- WO-A1-2006/079331
- DE-A1- 10 227 272
- US-A- 5 645 950
- US-A- 6 011 324
- US-A1- 2003 203 257
- US-A1- 2004 194 827
- US-A1- 2005 095 488

## Description

### [Technical Field]

The present invention relates to a fuel cell system that generates electric power through an electrochemical reaction. More particularly, the present invention relates to a fuel cell system that is improved to reliably supply air.

### [Background Art]

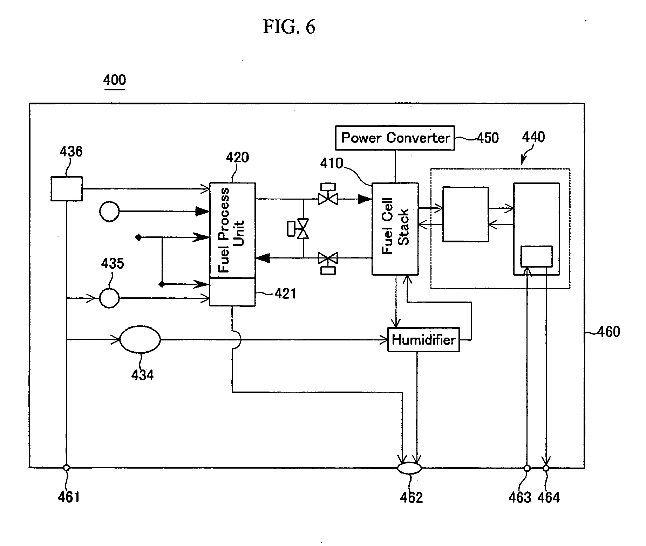

FIG. 6 shows a conventional fuel cell system. As shown in FIG. 6, a conventional fuel cell system 400 includes a fuel cell stack 410 generating direct current power using an electrochemical reaction between hydrogen and oxygen, a fuel process unit 420 for reforming a hydrocarbon-based electricity generation material, such as liquefied natural gas (LNG) or liquefied petroleum gas, into a gas that is high in hydrogen, an air supply unit having a humidifier and an air pump for supplying oxygen to the fuel cell stack 410, a cooling unit 440 for cooling the fuel cell stack 410, and a power converter 450 for converting the direct current power generated by the fuel cell stack 410 into alternating current power. The conventional fuel cell system 400 further includes a main body 460 for housing and protecting the above-described constituent elements, a variety of Balance of Plants(BOP), and a controller.

The conventional fuel cell system 400 includes a first air pump 434 that is used as the air supply unit for supplying the oxygen, which is required for the electrochemical reaction, to the fuel cell stack 410. The conventional fuel cell system 400 further includes a second air pump 435 for a combustor 421, which heats a reforming reactor of the fuel process unit 420 to a predetermined temperature, and a third air pump 436 for removing carbon monoxide in the fuel process unit 420. The first, second, and third air pumps 434, 435, and 436 share the air introduced through one air intake passage. The air intake passage extends from an air intake hole 461 formed on the main body 460.

In the conventional fuel cell system 400, residual air in the fuel cell stack 410 and the fuel process unit 420 is exhausted through an exhaust passage. The exhaust passage is connected to an air exhaust hole 462 formed on the main body 460 to exhaust air. The conventional fuel cell system 400 includes an auxiliary burner as one of the constituent elements of the cooling unit 440. The auxiliary burner is driven when heat consumption is greater than an amount of waste heat recovered to a water tank. The air required for the auxiliary burner is introduced through another air intake hole 463 formed on the main body 460, and is output through another air exhaust passage 464.

The conventional fuel cell system 400 is generally installed in a room. Therefore, when the fuel cell system 400 operates in an enclosed space for extended periods, a percentage of oxygen in the air introduced to the system is reduced. As a result, the fuel cell system 400 cannot reliably generate electric power.

Further, in the conventional fuel cell system 400, an air surging phenomenon where an amount of air supplied varies in accordance with installation environment conditions, such as a surrounding temperature, pressure, and the like, occurs. As a result, the fuel cell system 400 cannot reliably generate the electric power from the fuel cell stack 410.

DE 102 27 272 A2 discloses a method and an apparatus for the air conditioning of the a low pressure fuel cell. An air piston blower sucks air via a filter and provides the air to an air buffer reservoir. The buffered air is sucked by a second air piston blower and provided to another air buffer reservoir. At the output of the air buffer reservoir a capillary tube humidifier is arranged, before the air is provided to a fuel cell stack.

US 2004/0194827 A1 concerns a method and apparatus for providing a balanced fluid supply through multiple feeds are disclosed. The method comprises supplying the fluid through a plurality of feeds from a common fluid accumulator; determining the fluid pressure in a common fluid accumulator; and controlling the fluid pressure in the common fluid accumulator responsive to the fluid pressure sensed therein to maintain the fluid pressure within a predetermined range.

The above information disclosed in this Background section is only for enhancement of understanding of the background of the invention and therefore it may contain information that does not form the prior art that is already known in this country to a person of ordinary skill in the art.

### [Disclosure]

### [Technical Problem]

Exemplary embodiments of the present invention provide a fuel cell system having an air supply unit that is improved to reliably supply air regardless of an installation place of the fuel cell system and Installation environment conditions such as surrounding temperature, pressure, and the like.

Exemplary embodiments of the present invention also provide a fuel cell system that can be designed in a simple structure and can improve efficiency by unifying air intake and exhaust systems for respective constituent elements.

### [Technical Solution]

In exemplary embodiments of the present invention, a fuel cell system includes a fuel cell stack generating electric power using an electrochemical reaction between hydrogen and oxygen, a fuel process unit supplying reformed gas to the fuel cell stack by reforming an electricity generation material into the reformed gas that is rich in hydrogen, and an air supply unit supplying air containing oxygen to the fuel cell stack. The air supply unit includes an intake passage that extends from an outside space to the fuel cell stack, a first air pump that is installed on the intake passage to allow the air to be introduced into the fuel cell stack, and a first pressure buffer container that is disposed between the first air pump and the fuel cell stack to reduce pressure of the air flowing along the intake passage to a level less than a predetermined pressure.

The air supply unit further includes a first airflow rate controller that is disposed between the first pressure buffer container and the fuel cell stack to adjust a flow rate of the air by detecting a flow rate of the air flowing along the intake passage, and operating the first air pump in response to the detected air flow rate.

The air supply unit may further include an outside air intake container installed on an outside end of the intake passage extending out of a space in which the fuel cell system is installed, and a filter that is installed on the intake passage between the outside air intake container and the first air pump to filter off foreign objects contained in the air that is being introduced.

The intake passage includes a first section that is branched off from a point that is located in front of the first air pump and connected to the fuel process unit. The air supply unit further includes a second air pump that is installed on the first section of the intake passage to suck the air, a second pressure buffer container that is installed between the second air pump and the fuel process unit to reduce pressure of the air flowing along the first section of the intake passage to a level less than a predetermined pressure, and a second airflow rate controller that is disposed between the second pressure buffer container and the fuel process unit to adjust a flow rate of the air that is being introduced by detecting a flow rate of the air flowing along the first section of the intake passage.

The first section of the intake passage may be connected to one of a combustor and a carbon monoxide remover of the fuel process unit.

The fuel cell system may further include a cooling unit for cooling the fuel cell stack. The cooling unit may have an auxiliary burner for heating water recovered to a water tank in accordance with heat consumption. Further, the intake passage may include a second section that is branched off from a point located in front of the first air pump and is connected to the auxiliary burner of the cooling unit. Exhaust passages for exhausting residual air from the fuel cell stack, the fuel process unit, and the cooling unit are joined as a single passage and the single passage extends outside.

The intake passage further includes a third section that is branched off from a point that is located at the rear of the first pressure buffer container and is connected to the fuel process unit. The air supply unit further includes a third airflow rate controller that is disposed between the first pressure buffer container and the fuel process unit to adjust a flow rate of the air that is being introduced by detecting a flow rate of the air flowing along the third section of the intake passage.

### [Advantageous Effects]

As described above, the air supply unit of the fuel cell system according to the present invention can reliably supply the air without being limited by installation environment conditions, such as the surrounding temperature, pressure, and the like, and an installation place. Therefore, the fuel cell system of the present invention can stably generate electric power while significantly reducing the shaking phenomenon caused by air surging.

Furthermore, since both of the air intake system and the air exhaust system are simplified, the installation and maintenance of the fuel cell system can be conveniently realized.

### [Description of Drawings]

FIG. 1 is a schematic diagram of a fuel cell system according to a first exemplary embodiment of the present invention.
FIG. 2 is a schematic diagram of an air supply unit of the fuel cell system of FIG. 1.
FIG. 3 is a graph illustrating air supply performance of the fuel cell system of FIG. 1 and air supply performance of a conventional fuel cell system.
FIG. 4 is a schematic diagram of a fuel cell system according to a second exemplary embodiment of the present invention.
FIG. 5 is a schematic diagram of a fuel cell system according to a third exemplary embodiment of the present invention.
FIG. 6 is a schematic view of a conventional fuel cell system.

### Description of Reference Numerals Indicating Primary Elements in the Drawings

100, 200, 300, 400: Fuel Cell System
110, 210, 310, 410: Fuel Cell Stack
120, 220, 320, 420: Fuel Process Unit
140, 240, 340, 440: Cooling Unit
150, 250, 350, 450: Power Converter
160, 260, 360, 460: Air Supply Unit
131, 231, 331: Outside Air Intake System
132, 232, 332: Air Intake Passage
133, 233, 333: Filter
134, 135, 136, 234, 235, 236: Air Supply Pressure Adjusting Unit
137, 337, 434, 435, 436: Air Pump
138, 238, 338: Pressure Buffer Container
139, 339a, 339b, 339c: Airflow Rate Controller

### [Best Mode]

Reference will now be made in detail to the preferred embodiments of the present invention, examples of which are illustrated in the accompanying drawings. The invention may, however, be embodied in many different forms and should not be construed as being limited to the embodiments set forth herein.

### < First Exemplary Embodiment >

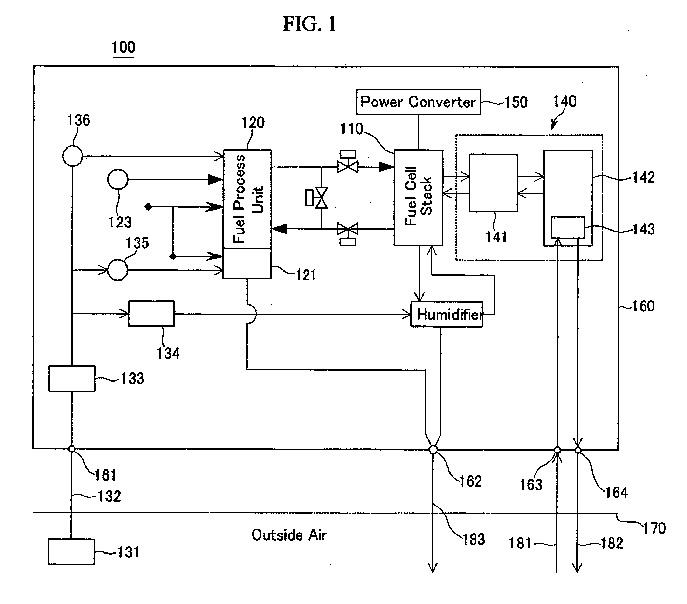

FIG. 1 is a schematic diagram of a fuel cell system according to an exemplary embodiment of the present invention.

As shown in FIG. 1, a fuel cell system 100 of a first exemplary embodiment includes a fuel cell stack 110 generating direct current power using an electrochemical reaction between hydrogen and oxygen, a fuel process unit 120 for reforming a hydrocarbon-based electricity generation material, such as liquefied natural gas (LNG) or liquefied petroleum gas, into gas that is high in hydrogen and supplying the reformed gas to the fuel cell stack 110, an air supply unit 130 having a humidifier and an air pump for supplying air containing oxygen to the fuel cell stack 110, a cooling unit 140 for cooling the fuel cell stack 110, and a power converter 150 for converting the direct current power generated by the fuel cell stack into alternating current power.

The fuel cell system 100 further includes a main body 160 for housing and protecting the above-described constituent elements, a variety of balance of plants(BOP) such as an air pump, a water pump, an electricity generation material gas compressor, and a solenoid valve, a temperature sensor, and a pressure sensor that are related to the fuel cell stack 110 and the fuel process unit 120, and a controller for controlling operations of the variety of constituent elements.

In order to reform the electricity generation material into the gas that is rich in hydrogen when the system starts operating, a reforming reactor should be heated to a predetermined temperature. Therefore, the fuel process unit 120 supplies the air and the electricity generation material to a combustor 121 to increase a temperature of the reactor up to 650 °C. When the reforming reactor reaches a reforming temperature (e.g., about 650°C), a predetermined amount of the electricity generation material is supplied to the fuel process unit 120 through an electricity generation supply line 123, and at the same time, a predetermined amount of water used for performing a steam reforming reaction is supplied to the fuel process unit 120. In addition, a small amount of air is supplied to a carbon monoxide removing unit.

The cooling unit 140 includes a water-cooled heat exchanger 141, a water tank 142 for recovering waste heat by heat-exchanging with cooling water, and an auxiliary burner 143 that is automatically driven when there is heat consumption greater than an amount of the waste heat recovered to the water tank 142.

The main body 160 defines an outer appearance of the fuel cell system 100 while housing and protecting the constituent elements. The main body 160 is provided with air intake holes 161 and 163 and air exhaust holes 162 and 164. Air intake passages 132 and 181 extend through the air intake holes 161 and 163 out of a space in which the main body 160 is installed. Air exhaust passages 183 and 182 extend through the air exhaust holes 162 and 164 out of the space in which the main body 160 is installed. The air intake passages 132 and 181 and the air exhaust passages 182 and 183 will be described later.

Although the fuel cell system 100 may be installed outdoors, it is generally installed in an enclosed room for management convenience. When the fuel cell system 100 is installed in a room and operated for extended periods, a percentage of oxygen in the air introduced during the operation of the fuel cell system 100 is reduced, and thus the electrochemical reaction in the fuel cell stack 110 may be unstably realized. Further, when the fuel cell system 100 is installed in the room and operated for extended periods, an air surging phenomenon where an amount of air supplied varies in accordance with installation environment conditions, such as a surrounding temperature, pressure, and the like, occurs. This may result in an unstable electrochemical reaction in the fuel cell stack 110 due to a shaking phenomenon such as air surging.

In order to solve the above problems, the fuel cell system 100 of the present exemplary embodiment is configured such that the intake passage 132 extends out of an outside wall 170 defining a space in which the main body 160 is installed and the air supply unit is designed to have the following structure.

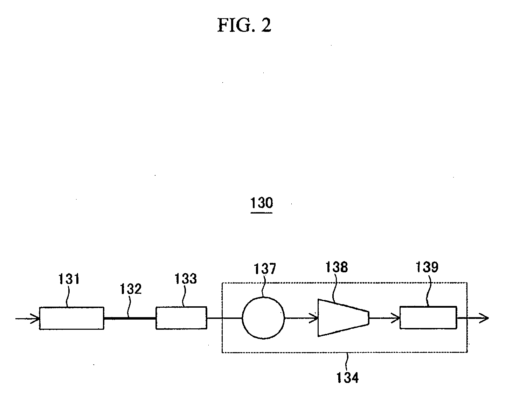

FIG. 2 is a schematic diagram of the air supply unit of the fuel cell system of FIG. 1.

As shown in FIGS. 1 and 2, the air supply unit 130 includes an outside air intake container 131, an intake passage 132, a filter 133, and first, second, and third air supply pressure adjusting units 134, 135, and 136. The first air supply pressure adjusting unit 134 includes a first air pump 137, a first pressure buffer container 138, and a first airflow rate controller 139.

The intake passage 132 extends from an outside space to the fuel cell stack 110. The first air supply pressure adjusting unit 134 is installed on the intake passage 132. The first air pump 137 supplies air to the fuel cell stack 110. The first pressure buffer container 138 reduces the pressure of air flowing from a rear side of the first air pump 137 to a level less than a predetermined pressure.

The first air pump 137 is set to have a supply pressure that is 0.2bar or less to realize less power consumption. The first air pump 137 is supplied with a predetermined amount of air, for example, a maximum amount of air required for a fuel cell stack 110 of a 1 KW fuel cell generator is about 45-65lpm. The first pressure buffer container 138 buffers the air supply pressure such that the air supply pressure can be maintained at 0.02-0.05bar, thereby supplying a uniform amount of air to the fuel cell stack 110.

The first airflow rate control unit 139 is disposed at the rear of the first pressure buffer container 138 to detect a flow rate of air flowing along the intake passage 132. Further, the first airflow rate controller 139 adjusts the airflow rate by operating the first air pump 137 in response to the detected airflow rate. At this point, the first airflow rate controller 139 measures the airflow rate with a mass unit rather than a volume unit and thus a uniform amount of the air can be supplied regardless of surrounding environments. Further, the first airflow rate controller 139 may be formed with two separated parts that are separately installed. That is, the first airflow rate controller 139 may include a sensor for detecting the airflow rate and a control unit for actuating the first air pump 137 in response to the detected airflow rate. The sensor and the control unit are separately installed.

As described above, the first air supply pressure adjusting unit 134 uniformly adjusts an inflow amount of the air without being affected by environment conditions such as a surrounding temperature, pressure, and the like, and reduces significantly the shaking phenomenon caused by air surging.

Further, the air supply unit 130 includes the outside-air intake container 131 that is installed on an outer end of the intake passage 132 extending out of the space where the air supply unit 130 is installed to allow the outside air to be introduced, and the filter 133 that is installed on the intake passage 132 between the outside-air intake container 131 and the first air supply pressure adjusting unit 134 to filter off foreign objects contained in the air that is being introduced.

In the present exemplary embodiment, the intake passage 132 of the air supply unit 130 further includes a first section that is branched off from a point located in front of the first air supply pressure adjusting unit 134 and is connected to the fuel process unit 120.

The second and third air supply pressure adjusting units 135 and 136 are installed on the first section of the intake passage 132. The second air supply pressure adjusting unit 135 is provided to supply the air to the combustor 121 of the fuel process unit 120. The second air supply pressure adjusting unit 135 includes constituent elements identically functioning to the constituent elements of the first air supply pressure adjusting unit 134. The third air supply pressure adjusting unit 136 is provided to supply air required in the carbon monoxide remover of the fuel process unit 120. The third air supply pressure adjusting unit 136 includes constituent elements identically functioning to the constituent elements of the first air supply pressure adjusting unit 134.

Then, the second and third air supply pressure adjusting units 135 and 136 can uniformly supply air to the combustor 121 and the carbon monoxide remover of the fuel process unit 120 without experiencing the shaking phenomenon caused by air surging.

As described above, in addition to the air intake system, the fuel cell system 100 separately includes an air exhaust system. The first exhaust passage 183 is in two sections respectively connected to the fuel cell stack 110 and the fuel process unit 120, and the two sections are then joined as a single passage. The joined single passage extends outside through the air exhaust hole 162. The second exhaust passage 182 is connected to the auxiliary burner 143 of the cooling unit 140 and extends outside through the air exhaust hole 164.

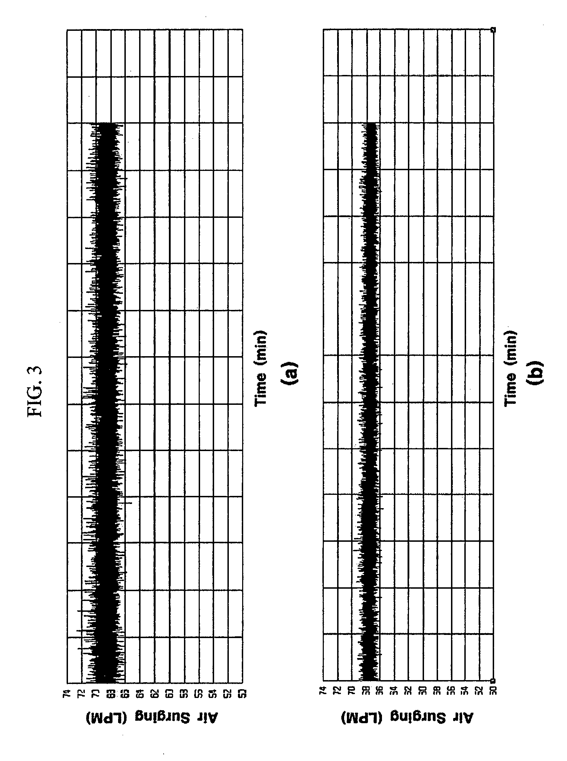

FIG. 3 is a graph illustrating the air supply performance of the fuel cell system of FIG. 1 and the air supply performance of a conventional fuel cell system.

The fuel cell system of the present exemplary embodiment and the conventional fuel cell system were tested under identical test conditions. As indicated by (a) of FIG. 3, in the conventional fuel cell system, the air is supplied with a maximum air surging variation of 7lpm (liter/min) and a relatively wide air surging variation range. On the other hand, in the fuel cell system of the present exemplary embodiment, as indicated by (b) of FIG. 3, since the above-described air supply pressure adjusting unit is applied, the maximum air surge is less than that of the conventional fuel cell system by only 2lpm (liter/min) and the air surging variation range is significantly reduced.

### <Second Exemplary Embodiment >

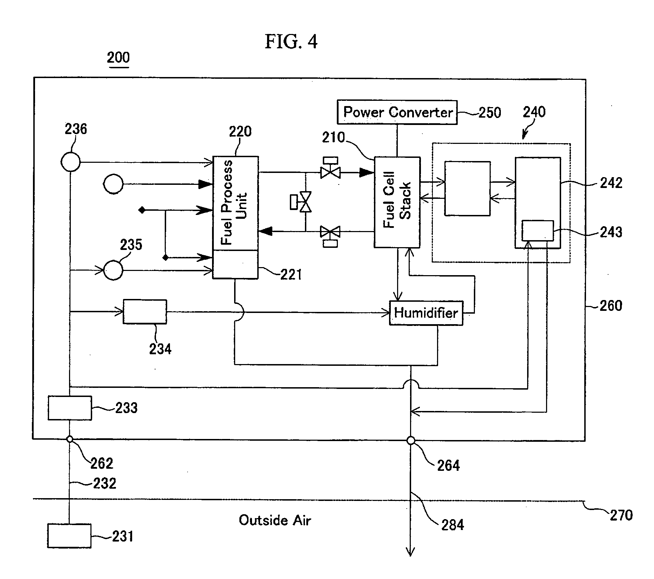

FIG. 4 is a schematic diagram of a fuel cell system according to a second exemplary embodiment of the present invention. A fuel cell system 200 of the second exemplary embodiment is identical to that of the first exemplary embodiment of FIG. 1 except that an air intake system and an air exhaust system are partly different from those of the first exemplary embodiment.

That is, an intake passage 232 of the fuel cell system 200 further includes a second section that is branched off from a point located in front of a first air supply pressure adjusting unit 234 and is connected to an auxiliary burner 243 of a cooling unit 240.

Further, an exhaust passage 284 of the fuel cell system 200 is divided into a plurality of sections that are respectively connected to a fuel cell stack 210, a fuel process unit 220, and the cooling unit 240 and are then joined as a single passage. The single passage extends out of an outside wall 270.

A main body 260 of the fuel cell system 200 is provided with an air intake hole 262 and the air intake passage 232 corresponds to the air intake hole 262. The main body 260 of the fuel cell system 200 is further provided with an air exhaust hole 264 and the air exhaust passage 284 corresponds to the air exhaust hole 264. Therefore, since the structure of the fuel cell system 200 can be simplified, the installation and maintenance of the fuel cell system 200 can be conveniently realized.

In addition, since other constituent elements of the fuel cell system of the second exemplary embodiment, such as a fuel cell stack 210, a fuel process unit 220, an air supply unit, the cooling unit 240, a power converter 250, an outside air intake container 231, a filter, and first, second, and third air supply pressure adjusting units 234, 235, and 236, are identical in their functions to those of the fuel cell system 100 of FIG. 1, a description thereof will be omitted herein. Further, like the first, second, and third air supply pressure adjusting units of the first exemplary embodiment, each of the first, second, and third air supply pressure adjusting units 234, 235, and 236 includes an air pump, a pressure buffer container, and an airflow rate controller.

### < Third Exemplary Embodiment >

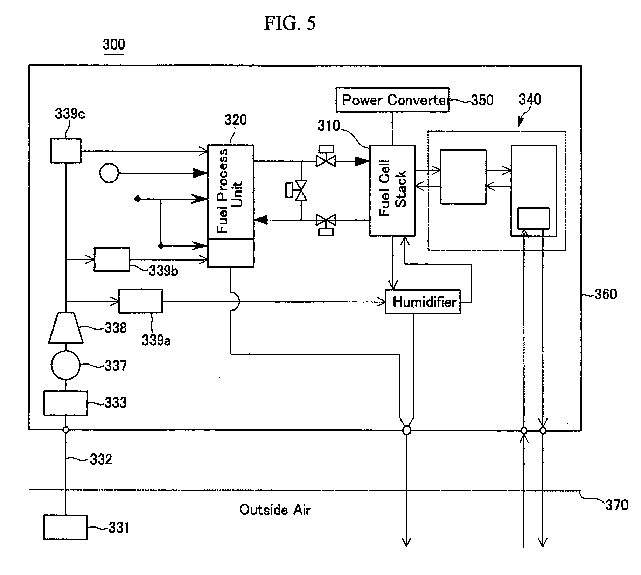

FIG. 5 is a schematic diagram of a fuel cell system according to a third exemplary embodiment of the present invention. The fuel cell system 300 of the third exemplary embodiment is identical to that of the first exemplary embodiment except that an air supply unit is partly different from that of the first exemplary embodiment.

An air supply unit of the fuel cell system includes an outside air intake container 331, an intake passage 332, a filter 333, and an air supply pressure adjusting unit. The air supply pressure adjusting unit includes a third air pump 337, a third pressure buffer container 338, and third airflow rate controllers 339a, 339b, and 339c.

The intake passage 332 further includes a third section and a section connected to a fuel cell stack 310. The third section is branched off from a point that is located at the rear of the third pressure buffer container 338 and is connected to a fuel process unit 320. The third air flow rate controllers 339b and 339c, for respectively controlling air supplied to a combustor 321 and a carbon monoxide remover of the fuel process unit 320, are installed on the third section of the intake passage 332.

The fuel cell system 300 of the third exemplary embodiment includes the air supply pressure adjusting unit. However, only one third air pump 337 and one third pressure buffer container 338 are installed on the intake passage 332 and shared. The third airflow rate controllers 339a, 339b, and 339c are provided to respectively correspond to constituent elements to which the intake passage 332 is connected.

In addition, since other constituent elements of the fuel cell system of the third exemplary embodiment, such as a fuel cell stack 310, a fuel process unit 320, an air supply unit, the cooling unit 340, a power converter 350, a main body 360, and an outside water 370, are identical in their functions to those of the fuel cell system 100 of FIG. 1, a description thereof will be omitted herein.

## Claims

1. A fuel cell system comprising:
a fuel cell stack (110, 210, 310) generating electric power using an electrochemical reaction between hydrogen and oxygen;
a fuel process unit (120, 220, 320) supplying reformed gas to the fuel cell stack by reforming an electricity generation material into the reformed gas that is rich in hydrogen; and
an air supply unit supplying air containing oxygen to the fuel cell stack,
wherein the air supply unit includes
an intake passage (161) that extends from an outside space to the fuel cell stack,a first air pump (137, 337) that is installed on the intake passage to allow the air to be introduced into the fuel cell stack,
a first pressure buffer container (138, 338) that is disposed between the first air pump and the fuel cell stack to reduce pressure of the air flowing along the intake passage to a level less than a predetermined pressure, and
a first airflow rate controller (139) that is disposed between the first pressure buffer container and the fuel cell stack to adjust a flow rate of the air by detecting a flow rate of the air flowing along the intake passage and operating the first air pump in response to the detected air flow rate,
wherein the intake passage includes a first section that is branched off from a point that is located in front of the first air pump and is connected to the fuel process unit, and a third section that is branched off from a point that is located at the rear of the first pressure buffer container and is connected to the fuel process unit, and
the air supply unit further includes:
a second air pump that is installed on the first section of the intake passage to suck the air;
a second pressure buffer container that is installed between the second air pump and the fuel process unit (210, 110) to reduce pressure of the air flowing along the first section of the intake passage to a level less than a predetermined pressure;
a second airflow rate controller that is disposed between the second pressure buffer container and the fuel process unit to adjust a flow rate of the air that is being introduced by detecting a flow rate of the air flowing along the first section of the intake passage; and
a third airflow rate controller that is disposed between the first pressure buffer container and the fuel process unit to adjust a flow rate of the air, which is being introduced, by detecting a flow rate of the air flowing along the third section of the intake passage.

2. The fuel cell system of claim 1, wherein
the air supply unit further includes an outside air intake container (131, 331) installed on an outside end of the intake passage extending out of a space in which the fuel cell system is installed, and a filter (133, 333) that is installed on the intake passage between the outside air intake container and the first air pump to filter off foreign objects contained in the air that is being introduced.

3. The fuel cell system of claim 1, wherein:
the first section of the intake passage is connected to one of a combustor (121) and a carbon monoxide remover of the fuel process unit.

4. The fuel cell system of claim 3, further comprising a cooling unit for cooling the fuel cell stack, the cooling unit having an auxiliary burner for heating water recovered to a water tank in accordance with heat consumption,
wherein the intake passage includes a second section that is branched off from a point located in front of the first air pump and is connected to the auxiliary burner (243) of the cooling unit, and
exhaust passages for exhausting residual air from the fuel cell stack, the fuel process unit, and the cooling unit are joined as a single passage and the single passage extends outside.

## Patentansprüche

1. Ein Brennstoffzellensystem, aufweisend:
einen Brennstoffzellenstapel (110, 210, 310), der mittels einer elektrochemischen Reaktion zwischen Wasserstoff und Sauerstoff elektrische Energie erzeugt,
eine Brennstoff-Aufbereitungseinheit (120, 220, 230), die dem Brennstoffzellenstapel reformiertes Gas zuführt, durch Reformieren eines Stromerzeugungsmaterials in das reformierte Gas, das reich an Wasserstoff ist, und
eine Luft-Zuführ-Einheit, die dem Brennstoffzellenstapel Sauerstoff enthaltende Luft zuführt,
wobei die Luft-Zuführ-Einheit aufweist:
eine Einlasspassage (161), die sich von einem Außenraum zu dem Brennstoffzellenstapel erstreckt, eine erste Luftpumpe (137, 337), die an der Einlasspassage installiert ist, um zu ermöglichen, dass die Luft in den Brennstoffzellenstapel eingeführt wird,
einen ersten Druckpuffer-Behälter (138, 338), der zwischen der ersten Luftpumpe und dem Brennstoffzellenstapel angeordnet ist, um den Druck der die Einlasspassage entlangströmenden Luft auf einen Pegel zu reduzieren, der kleiner als ein vorbestimmter Druck ist, und
eine erste Luftdurchsatz-Steuereinrichtung (139), die zwischen dem ersten Druckpuffer-Behälter und dem Brennstoffzellenstapel angeordnet ist, um einen Luftdurchsatz anzupassen, durch Erfassen eines Durchsatzes der die Einlasspassage entlangströmenden Luft und durch Betätigen der ersten Luftpumpe in Antwort auf den detektierten Luftdurchsatz,
wobei die Einlasspassage aufweist: einen ersten Abschnitt, der von einem Punkt abgezweigt ist, der sich vor der ersten Luftpumpe befindet, und der mit der Brennstoff-Aufbereitungseinheit verbunden ist, und einen dritten Abschnitt, der von einem Punkt abgezweigt ist, der sich an der Rückseite des ersten Druckpuffer-Behälters befindet, und der mit der Brennstoff-Aufbereitungseinheit verbunden ist, und
wobei die Luft-Zuführ-Einheit ferner aufweist:
eine zweite Luftpumpe, die an dem ersten Abschnitt der Einlasspassage installiert ist, um die Luft anzusaugen,
einen zweiten Druckpuffer-Behälter, der zwischen der zweiten Luftpumpe und der Brennstoff-Aufbereitungseinheit (210, 110) installiert ist, um den Druck der den ersten Abschnitt der Einlasspassage entlangströmenden Luft auf einen Pegel zu reduzieren, der kleiner als ein vorbestimmter Druck ist,
eine zweite Luftdurchsatz-Steuereinrichtung, die zwischen dem zweiten Druckpuffer-Behälter und der Brennstoff-Aufbereitungseinheit angeordnet ist, um einen Durchsatz der eingeführten Luft anzupassen, durch Detektieren eines Durchsatzes der den ersten Abschnitt der Einlasspassage entlangströmenden Luft, und
eine dritte Luftdurchsatz-Steuereinrichtung, die zwischen dem ersten Druckpuffer-Behälter und der Brennstoff-Aufbereitungseinheit angeordnet ist, um einen Durchsatz der eingeführten Luft anzupassen, durch Detektieren eines Durchsatzes der den dritten Abschnitt der Einlasspassage entlangströmenden Luft.

2. Das Brennstoffzellensystem gemäß Anspruch 1, wobei
die Luft-Zuführ-Einheit ferner aufweist einen Außenluft-Einlassbehälter (131, 331), der an einem äußeren Ende der Einlasspassage installiert ist, der sich aus einem Raum heraus erstreckt, in dem das Brennstoffzellensystem installiert ist, und einen Filter (133, 333), der an der Einlasspassage zwischen dem Außenluft-Einlassbehälter und der ersten Luftpumpe installiert ist, um Fremdkörper herauszufiltern, die in der eingeführten Luft enthalten sind.

3. Das Brennstoffzellensystem gemäß Anspruch 1, wobei:
der erste Abschnitt der Einlasspassage mit einem von einer Brennkammer (121) und einem Kohlenstoffmonoxid-Entferner der Brennstoff-Aufbereitungseinheit verbunden ist.

4. Das Brennstoffzellensystem gemäß Anspruch 3, ferner aufweisend eine Kühleinheit zum Kühlen des Brennstoffzellenstapels, wobei die Kühleinheit einen Hilfsbrenner aufweist zum Erwärmen von an einen Wasserbehälter zurückgewonnenem Wasser gemäß dem Wärmeverbrauch,
wobei die Einlasspassage einen zweiten Abschnitt aufweist, der von einem vor der ersten Luftpumpe angeordneten Punkt abgezweigt ist und mit dem Hilfsbrenner (243) der Kühleinheit verbunden ist, und
wobei Einlasspassagen zum Abführen von Restluft aus dem Brennstoffzellenstapel, der Brennstoff-Aufbereitungseinheit und der Kühleinheit als ein einziger Durchgang zusammengefügt sind, und die einzige Passage sich nach außen erstreckt.

## Revendications

1. Système de piles à combustible comprenant :
un empilage de piles à combustible (110, 210, 310) générant de l'énergie électrique en utilisant une réaction électrochimique entre l'hydrogène et l'oxygène ;
une unité de traitement de combustible (120, 220, 320) fournissant un gaz reformé à l'empilage de piles à combustible en reformant un matériau de génération d'électricité en le gaz reformé qui est riche en hydrogène ; et
une unité d'alimentation en air fournissant de l'air contenant de l'oxygène à l'empilage de piles à combustible,
dans lequel l'unité d'alimentation en air comprend :
un passage d'admission (161) qui s'étend d'un espace extérieur jusqu'à l'empilage de piles à combustible, une première pompe à air (137, 337) qui est installée sur le passage d'admission pour permettre l'introduction de l'air dans l'empilage de piles à combustible,
un premier contenant tampon de pression (138, 338) qui est disposé entre la première pompe à air et l'empilage de piles à combustible pour réduire la pression de l'air circulant le long du passage d'admission à un niveau inférieur à une pression prédéterminée, et
un premier contrôleur de débit d'air (139) qui est disposé entre le premier contenant tampon de pression et l'empilage de piles à combustible pour ajuster un débit de l'air en détectant un débit de l'air circulant le long du passage d'admission et en mettant en oeuvre la première pompe à air en réponse au débit d'air détecté,
dans lequel le passage d'admission comprend une première section qui bifurque en un point qui est situé à l'avant de la première pompe à air et qui est reliée à l'unité de traitement de combustible, et une troisième section qui bifurque en un point qui est situé à l'arrière du premier contenant tampon de pression et qui est reliée à l'unité de traitement de combustible, et
l'unité d'alimentation en air comprend en outre :
une deuxième pompe à air qui est installée sur la première section du passage d'admission pour aspirer l'air ;
un deuxième contenant tampon de pression qui est installé entre la deuxième pompe à air et l'unité de traitement de combustible (210, 110) pour réduire la pression de l'air circulant le long de la première section du passage d'admission à un niveau inférieur à une pression prédéterminée;
un deuxième contrôleur de débit d'air qui est disposé entre le deuxième contenant tampon de pression et l'unité de traitement de combustible pour ajuster un débit de l'air qui est introduit en détectant un débit de l'air circulant le long de la première section du passage d'admission ; et
un troisième contrôleur de débit d'air qui est disposé entre le premier contenant tampon de pression et l'unité de traitement de combustible pour ajuster un débit de l'air, qui est introduit, en détectant un débit de l'air circulant le long de la troisième section du passage d'admission.

2. Système de piles à combustible selon la revendication 1, dans lequel
l'unité d'alimentation en air comprend en outre un contenant d'admission d'air extérieur (131, 331) installé sur une extrémité extérieure du passage d'admission s'étendant en-dehors d'un espace dans lequel le système de piles à combustible est installé, et un filtre (133, 333) qui est installé sur le passage d'admission entre le contenant d'admission d'air extérieur et la première pompe à air pour filtrer les objets étrangers contenus dans l'air qui est introduit.

3. Système de piles à combustible selon la revendication 1, dans lequel :
la première section du passage d'admission est reliée à l'un d'une chambre de combustion (121) et d'un dispositif de retrait de monoxyde de carbone de l'unité de traitement de combustible.

4. Système de piles à combustible selon la revendication 3, comprenant en outre une unité de refroidissement pour refroidir l'empilage de piles à combustible, l'unité de refroidissement comportant un brûleur auxiliaire pour chauffer l'eau récupérée dans un réservoir d'eau en fonction de la consommation de chaleur,
dans lequel le passage d'admission comprend une deuxième section qui bifurque en un point situé à l'avant de la première pompe à air et qui est reliée au brûleur auxiliaire (243) de l'unité de refroidissement, et
des passages d'échappement pour évacuer l'air résiduel de l'empilage de piles à combustible, de l'unité de traitement de combustible, et de l'unité de refroidissement sont joints en tant que passage unique et le passage unique s'étend à l'extérieur.
